(19) Europäisches Patentamt
European Patent Office
Office européen des brevets

(11) **EP 4 038 468 B1**

(12) **FASCICULE DE BREVET EUROPEEN**

(45) Date de publication et mention
de la délivrance du brevet:
**26.06.2024 Bulletin 2024/26**

(21) Numéro de dépôt: **20796862.9**

(22) Date de dépôt: **28.09.2020**

(51) Classification Internationale des Brevets (IPC):
**G05D 23/19** *(2006.01)* **H05B 1/02** *(2006.01)*

(52) Classification Coopérative des Brevets (CPC):
**G05D 23/1919; H05B 1/0236**

(86) Numéro de dépôt international:
**PCT/FR2020/051688**

(87) Numéro de publication internationale:
**WO 2021/064314 (08.04.2021 Gazette 2021/14)**

(54) **PROCÉDÉ DE GESTION THERMIQUE, NOTAMMENT POUR VÉHICULE AUTOMOBILE, ET UNITÉ DE COMMANDE ASSOCIÉE**

THERMISCHES MANAGEMENT-PROZESS, INSBESONDERE FÜR EIN KRAFTFAHRZEUG UND ZUGEHÖRIGE STEUEREINHEIT

THERMAL MANAGEMENT PROCESS, ESPECIALLY FOR A MOTOR VEHICLE, AND ASSOCIATED CONTROL UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2019 FR 1910891**

(43) Date de publication de la demande:
**10.08.2022 Bulletin 2022/32**

(73) Titulaire: **VALEO SYSTEMES THERMIQUES**
**78320 Le Mesnil Saint-Denis (FR)**

(72) Inventeurs:
• **GOGMOS, Erwan**
**78320 LE MESNIL SAINT-DENIS (FR)**

• **PUZENAT, Bertrand**
**78320 LE MESNIL SAINT-DENIS (FR)**

(74) Mandataire: **Valeo Systèmes Thermiques**
**Service Propriété Intellectuelle**
**8, rue Louis Lormand**
**La Verrière**
**78320 Le Mesnil Saint Denis (FR)**

(56) Documents cités:
**DE-A1-102007 033 720     DE-A1-102016 109 039**
**DE-A1-102016 216 295**

**Description**

L'invention concerne un procédé de gestion thermique en cas de surchauffe d'un dispositif de chauffage électrique pour chauffer un fluide. Il s'agit notamment d'un dispositif de chauffage électrique destiné à équiper un véhicule automobile. De façon non limitative, le dispositif de chauffage électrique peut être configuré pour chauffer par exemple un flux d'air destiné à traverser le dispositif de chauffage. L'invention peut s'appliquer aussi bien pour un dispositif de chauffage électrique haute tension que pour un dispositif de chauffage électrique basse tension.

L'invention s'applique notamment à une installation de chauffage et/ou ventilation et/ou climatisation pour véhicule automobile comprenant un tel dispositif de chauffage.

Un véhicule automobile est couramment équipé d'une telle installation de chauffage et/ou ventilation et/ou climatisation qui est destinée à réguler les paramètres aérothermiques d'un flux d'air destiné à être distribué dans l'habitacle, en particulier la température du flux d'air. Pour ce faire, l'installation comprend dans sa généralité un ou plusieurs dispositifs de traitement thermique, dont notamment un dispositif de chauffage électrique, autrement appelé radiateur électrique, pour le chauffage d'un fluide tel qu'un flux d'air.

Le dispositif de chauffage électrique comporte des modules chauffants électriques. À titre d'exemple, les modules chauffants électriques peuvent être disposés de manière à être exposés directement à un flux d'air traversant le dispositif de chauffage électrique.

Selon une solution connue, les modules chauffants comportent des éléments résistifs par exemple à coefficient de température positif (CTP), tels que des céramiques aussi dénommées pierres CTP.

Il s'agit d'éléments dont la valeur résistive varie très fortement en fonction de la température. Plus précisément, la valeur ohmique des éléments résistifs CTP croît très rapidement au-delà d'un seuil de température prédéterminé.

Les éléments résistifs peuvent être alimentés par une source de tension électrique embarquée, à savoir des batteries. Un connecteur électrique relié à la source de tension embarquée sur le véhicule peut être prévu pour amener la puissance électrique nécessaire à l'alimentation du dispositif de chauffage électrique, notamment des éléments résistifs. En outre, les éléments résistifs sont commandés par une unité électronique de commande qui comporte généralement un circuit d'alimentation électrique. Le circuit d'alimentation électrique est monté par exemple sur une carte à circuit imprimé.

En particulier dans le cas d'un dispositif de chauffage électrique haute tension, il peut s'agir d'un dispositif de chauffage principal du véhicule, qui peut donc être très puissant. En cas de surchauffe, le dispositif peut atteindre en au moins un point une température limite pour le bon fonctionnement du système. Les éléments résistifs à effet CTP servent de protection contre une forte surchauffe pouvant générer par exemple un incendie, permettant ainsi de garantir la sécurité des passagers.

Toutefois, certains composants proches du dispositif de chauffage électrique, comme par exemple des parties plastiques de l'installation de chauffage et/ou ventilation et/ou climatisation, peuvent être plus sensibles notamment dans certaines conditions, par exemple dans le cas d'une température élevée alors que les volets de l'installation de chauffage et/ou ventilation et/ou climatisation sont fermés, volontairement ou en raison d'une défaillance mécanique non détectée.

Il est donc intéressant de contrôler la température du dispositif de chauffage électrique, afin d'éviter de dégrader les composants alentours.

Par ailleurs, la demande de brevet publiée sous le numéro DE 10 2016 109 039 A1 décrit un procédé de détection d'une surchauffe de résistances de chauffage à partir de mesures de tension et de courant de ces résistances de chauffage.

L'invention a pour objectif de proposer une solution de gestion thermique en cas de détection d'une surchauffe du dispositif de chauffage électrique permettant d'éviter au moins partiellement les inconvénients précités de l'art antérieur.

À cet effet, l'invention a pour objet un procédé de gestion thermique selon la revendication 1.

Des caractéristiques optionnelles de l'invention sont énoncées dans les revendications dépendantes 2 à 14.

L'invention a également pour objet une unité de commande pour un dispositif de chauffage électrique selon la revendication 15.

D'autres caractéristiques et avantages de l'invention apparaitront plus clairement à la lecture de la description suivante, donnée à titre d'exemple illustratif et non limitatif, et des dessins annexés parmi lesquels :

[Fig. 1] montre un organigramme de différentes étapes du procédé de gestion thermique, en particulier d'une première phase de régulation de consigne selon l'invention.

[Fig. 2] est un tableau de valeurs représentant un exemple d'évolution de la valeur seuil de détection du rapport cyclique de signal de pilotage par modulation de largeur d'impulsions en fonction de la consigne de puissance électrique pour une tension constante.

[Fig. 3] montre un organigramme de différentes étapes du procédé de de gestion thermique, en particulier d'une deuxième phase de régulation de consigne selon un sens d'évolution opposé à la première phase de régulation.

[Fig. 4] montre un organigramme de différentes étapes du procédé de gestion thermique en cas de coupure de l'alimentation électrique des éléments résistifs suite à l'implémentation de la première phase de régulation.

[Fig. 5] montre un exemple d'organigramme de différentes étapes préalables d'un procédé de détection de surchauffe avant activation de la première phase de régulation du procédé de gestion thermique selon l'invention.

Dans ces figures, les éléments identiques portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la description, certains éléments peuvent être indexés, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et de telles dénominations peuvent être aisément interchangées sans sortir du cadre de la présente description. Cette indexation n'implique pas non plus un ordre dans le temps.

L'invention est du domaine d'une installation de chauffage et/ou ventilation et/ou climatisation d'un flux d'air (non représentée sur les figures), destinée à équiper un véhicule automobile pour réguler les paramètres aérothermiques du flux d'air distribué dans une ou plusieurs zones de l'habitacle du véhicule.

L'invention concerne plus particulièrement un dispositif de chauffage électrique, autrement appelé radiateur électrique, pour véhicule automobile, équipant notamment une telle installation. Il s'agit d'un dispositif de chauffage électrique d'un fluide. De façon non limitative, il peut s'agir d'un dispositif de chauffage d'un flux d'air. Par la suite, la description est faite en référence à un flux d'air, mais l'invention peut s'appliquer à un autre fluide.

En particulier, il peut s'agir d'un dispositif de chauffage électrique ou radiateur haute-tension. « Haute tension » définit par exemple une tension supérieure à 90V ou 120V. En variante, il peut s'agir d'un radiateur basse tension.

Le dispositif de chauffage électrique est configuré pour transformer de l'énergie électrique prélevée par exemple sur le véhicule en énergie thermique restituée dans un flux d'air traversant l'installation de chauffage et/ou ventilation et/ou climatisation.

Le dispositif de chauffage électrique peut comporter un nombre prédéfini de modules chauffants. Ces modules chauffants peuvent être agencés de manière à être exposés directement au flux d'air traversant le dispositif de chauffage électrique.

Plus précisément, les modules chauffants peuvent comprendre chacun des éléments résistifs. Le dispositif de chauffage électrique comporte donc une pluralité d'éléments résistifs configurés pour être alimentés électriquement par une source de tension électrique.

Les éléments résistifs peuvent être de type à coefficient de température positif (CTP). Les éléments résistifs sont par exemple réalisés sous la forme de céramiques CTP, par exemple connues sous la dénomination de pierres CTP. En variante, il peut s'agir d'éléments résistifs de type à coefficient de température négatif (CTN).

Le dispositif de chauffage électrique comprend généralement en outre une unité électronique de commande pour commander les modules chauffants. Une telle unité de commande comporte un ou plusieurs composants électroniques et/ou électriques. L'unité de commande comporte notamment un circuit d'alimentation électrique (non représenté) des éléments résistifs. Le circuit d'alimentation électrique est monté par exemple sur un support de circuit électrique tel qu'une carte à circuit imprimé connue sous le sigle PCB en anglais pour « Printed Circuit Board ».

À titre d'exemple, le circuit d'alimentation électrique comporte des transistors (non représentés), chacun permettant d'autoriser ou non le passage du courant dans un nombre prédéfini de modules chauffants.

Les éléments résistifs sont destinés à être alimentés par une source d'alimentation électrique (non représentée), telle que des batteries, en provenance par exemple du véhicule. L'alimentation électrique des éléments résistifs est pilotée par modulation de largeur d'impulsions connue sous le sigle MLI ou PWM pour Pulse Width Modulation en anglais.

L'unité de commande est configurée pour générer un signal de pilotage par modulation de largeur d'impulsions de l'alimentation électrique des éléments résistifs, notamment d'au moins un sous-ensemble d'éléments résistifs. Des sous-ensembles distincts d'éléments résistifs peuvent être pilotés de façon indépendante par modulation de largeur d'impulsions. L'alimentation électrique des éléments résistifs, notamment d'au moins un sous-ensemble d'éléments résistifs formant un sous-système, peut se faire en fonction d'une consigne.

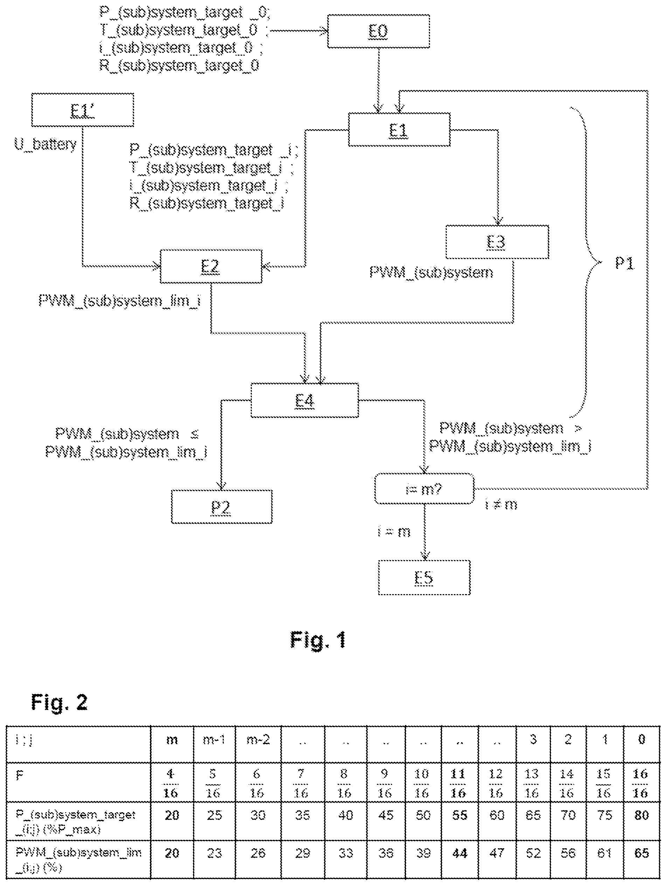

Selon un mode de réalisation préféré, la consigne est une consigne de puissance électrique $P_{(sub)system\ target\ 0}$ (figure 1). Le dispositif de chauffage est contrôlé en boucle fermée. En variante, l'alimentation électrique des éléments résistifs peut se faire en fonction d'une consigne de température $T_{(sub)system\ target\ 0}$. On peut envisager une alternative avec une consigne d'intensité de courant électrique $i_{(sub)system\ target\ 0}$ à tension constante, ou éventuellement de résistance $R_{(sub)system\ target\ 0}$. Le préfixe « sub » est écrit entre parenthèse pour signifier que la consigne concerne un sous-ensemble d'éléments résistifs, ou respectivement l'ensemble des éléments résistifs.

# PROCEDE

La figure 1 représente de façon schématique les étapes d'un procédé de gestion thermique suite à une détection de surchauffe du dispositif de chauffage électrique, d'un ou plusieurs sous-ensembles d'éléments résistifs. Ceci permet notamment d'agir selon une stratégie propre pour différents points chauds par exemple lorsque le dispositif de chauffage électrique équipe une installation de chauffage et/ou ventilation et/ou climatisation dite multi-zones, et que dans ce cas les modules chauffants peuvent être dédiés au chauffage de zones distinctes de l'habitacle.

Il est possible de mettre en oeuvre une telle gestion thermique pour tous les éléments résistifs, ou indépendamment pour chaque sous-ensemble d'éléments résistifs commandé par un transistor ou plusieurs transistors. La stratégie varie également en fonction de la nature des éléments résistifs, par exemple selon qu'il s'agit d'éléments résistifs de type à coefficient de température positif CTP ou négatif CTN.

Au démarrage du procédé, les éléments résistifs sont pilotés selon une consigne initiale qui correspond au minimum entre la consigne reçue de l'unité de commande pilotant les éléments résistifs et une consigne maximale autorisée. À titre illustratif, pour une consigne de puissance, la consigne de puissance initiale $P\_{(sub)system\ target\ 0}$ ou maximale autorisée est par exemple égale à 80% d'une puissance maximale $P\_max$.

Le procédé de gestion thermique est déclenché lorsqu'une surchauffe est détectée lors d'une étape préalable E0. Par exemple, la surchauffe peut être détectée en surveillant l'évolution du rapport cyclique du signal de pilotage $PWM\_{(sub)system}$ d'au moins un sous-ensemble d'éléments résistifs formant un sous-système. Dans la suite de la description, on désigne par $PWM\_{(sub)system}$ avec « sub » entre parenthèse, le rapport cyclique du signal de pilotage par modulation de largeur d'impulsions pour un sous-système, respectivement pour l'ensemble des éléments résistifs.

De façon générale, à la détection de la surchauffe, la consigne est régulée graduellement dans un sens, en étant augmentée ou réduite selon le cas. Cette régulation est réitérée jusqu'à ce que le rapport cyclique du signal de pilotage PWM ne soit plus représentatif d'une surchauffe. Dans ce cas, la consigne peut être régulée dans l'autre sens, avantageusement également de façon progressive, jusqu'à revenir à la consigne de départ.

**Première phase de régulation** Ainsi à la détection de la surchauffe, une première phase P1 de régulation graduelle de la consigne selon un premier sens d'évolution est activée. Il s'agit en particulier d'une phase de déclassement ou de limitation, durant laquelle la consigne est limitée, abaissée.

La première phase P1 comprend une étape E1 pour réguler, notamment limiter, la consigne. À titre d'exemple, dans le cas d'une consigne de puissance et d'éléments résistifs CTP, la régulation se fait en abaissant la consigne de puissance. Il s'agit donc dans cet exemple d'une phase de déclassement ou « derating » en anglais de la consigne de puissance.

La régulation de la consigne se fait selon un premier pas prédéfini. Ce pas est choisi selon un compromis entre l'inertie du dispositif de chauffage électrique et la réactivité souhaitée.

Le pas prédéfini peut être constant. Il est par exemple de l'ordre de $\frac{1}{16}$ de la consigne maximale autorisée $P\_{(sub)system\ target\ 0}$ ; $T\_{(sub)system\ target\ 0}$ ; $i\_{(sub)system\ target\ 0}$ ; $R\_{(sub)system\ target\ 0}$. Ainsi, selon l'exemple de régulation par déclassement de la consigne telle que la consigne de puissance, à chaque itération de la phase de déclassement, la consigne de puissance est abaissée de $\frac{1}{16}$ de la consigne maximale autorisée, passant d'un facteur $\frac{16}{16}$ à l'étape E0 à un facteur $\frac{15}{16}$ à la première itération de la phase de déclassement, puis $\frac{14}{16}$ en cas d'une deuxième itération de la phase de déclassement, puis $\frac{13}{16}$ et ainsi de suite.

De façon alternative, le premier pas peut être variable. Selon un exemple de réalisation, à partir d'un nombre prédéfini d'itérations de la première phase P1 de régulation, le premier pas prédéfini est augmenté de façon à accélérer l'évolution de la consigne et du rapport cyclique. Selon le cas précédent d'une première phase de déclassement de la consigne de puissance par exemple, le premier pas prédéfini, peut être assez faible au départ et peut s'amplifier à mesure des itérations de la première phase de déclassement, de façon à accélérer la baisse de la consigne de puissance et du rapport cyclique par exemple avec des pas plus importants.

À chaque régulation d'ordre i, c'est-à-dire dans cet exemple à chaque limitation de la consigne permettant d'atteindre un niveau de déclassement i, la consigne passe à une valeur régulée/limitée de consigne $P\_{(sub)system\_target\_i}$ ; $T\_{(sub)system\_target\_i}$ ; $i\_{(sub)system\_target\_i}$ ; $R\_{(sub)system\ target\ i}$.

La première phase de régulation comporte une étape E2 de détermination d'une valeur seuil correspondante de détection pour le rapport cyclique du signal de pilotage par modulation de largeur d'impulsions du nombre prédéfini d'éléments résistifs.

Cette valeur seuil peut être déterminée pour un ou plusieurs sous-systèmes, c'est-à-dire pour un ou plusieurs ensembles de modules chauffants commandés par un ou plusieurs transistors, ou pour tout le système c'est-à-dire l'ensemble des éléments résistifs pour tous les modules chauffants. Lorsque la gestion thermique est effectuée pour un sous-ensemble, la valeur seuil de détection est désignée par PWM_subsystem_lim_i. Pour chaque sous-ensemble piloté indépendamment, des valeurs seuils de détection peuvent être définies de façon indépendante, selon la nature et/ou le nombre des éléments résistifs du sous-ensemble. Lorsqu'il s'agit d'une gestion thermique pour tout le système, la valeur seuil de détection est désignée par PWM_system_lim_i. Dans la suite de la description, PWM_(sub)system_lim avec « sub » entre parenthèse, désigne la valeur seuil de détection définie pour un sous-ensemble, respectivement pour l'ensemble des éléments résistifs.

La valeur seuil de détection est représentative d'une surchauffe du sous-système ou de l'ensemble du système. Cette valeur seuil est déterminée en fonction de la valeur régulée de consigne P_(sub)system_target_i ; T_(sub)system_target_i ; i_(sub)system target i ; R_(sub)system target i.

En particulier, la valeur seuil de détection PWM_(sub)system_lim_i peut être définie en fonction du couple de la tension d'alimentation U_battery et de la consigne régulée, offrant alors une matrice de valeurs seuil de détection possibles.

Dans ce cas, une étape E1' peut être mise en oeuvre au préalable, dans laquelle la tension d'alimentation U_battery est mesurée. Cette étape E1' peut être mise en oeuvre par un capteur de mesure de tension. La tension d'alimentation U_battery peut être constante.

La valeur seuil de détection PWM_(sub)system_lim_i pour le rapport cyclique dudit signal de pilotage peut être lue dans un tableau basé sur la consigne et éventuellement sur la tension d'alimentation U_battery, le tableau étant stocké dans une commande du dispositif de chauffage électrique.

Considérant le cas d'une consigne de puissance pour des éléments résistifs CTP, un exemple de valeurs seuil de détection PWM_(sub)system_lim_i est donné à titre illustratif à la figure 2. Le tableau de valeurs de la figure 2 est donné pour une tension d'alimentation constante par exemple de 306V, et considérant que la consigne de puissance initiale maximale autorisée est à 80% de la puissance maximale P_max. Pour cette consigne de puissance initiale, la valeur seuil de détection PWM_(sub)system_lim est 65%. Aucun déclassement de la consigne n'a eu lieu, le niveau de déclassement i est égal à 0.

Lors d'une première itération de la phase de déclassement, la consigne de puissance est abaissée de $\frac{1}{16}$, passant donc d'un facteur F de $\frac{16}{16}$ à $\frac{15}{16}$, ce qui correspond par exemple à 75% de la puissance maximale P_max et la valeur seuil de détection PWM_(sub)system_lim_i correspondante est 61%. La consigne atteint le niveau de déclassement i = 1.

Si la consigne de puissance est de nouveau abaissée, le facteur F passe à $\frac{14}{16}$, ce qui correspond par exemple à 70% de la puissance maximale P_max et la valeur seuil de détection PWM_(sub)system_lim_i correspondante est 56% et ainsi de suite. La consigne atteint le niveau de déclassement i = 2.

Selon une autre alternative, il est envisageable que la valeur seuil de détection pour le rapport cyclique du signal de pilotage soit calculée au moyen d'un algorithme (non décrit plus en détail dans la présente) stocké dans une commande du dispositif de chauffage électrique.

En se référant de nouveau à la figure 1, lors d'une étape E3, le rapport cyclique du signal de pilotage par modulation de largeur d'impulsions du nombre prédéfini d'éléments résistifs PWM_(sub)system peut être relevé.

À l'étape E4, la valeur du rapport cyclique du signal de pilotage PWM_(sub)system relevée à l'étape E3 est comparée à la valeur seuil de détection du rapport cyclique du signal de pilotage PWM_(sub)system_lim_i correspondante déterminée à l'étape E2.

Cette étape de comparaison E4 peut être réalisée pour un ou plusieurs sous-systèmes, c'est-à-dire pour un ou plusieurs ensembles de modules chauffants commandés par un ou plusieurs transistors, ou pour tout le système c'est-à-dire l'ensemble des éléments résistifs pour tous les modules chauffants.

Cette étape de comparaison E4 peut être mise en oeuvre par un moyen de traitement tel qu'un comparateur.

Si le rapport cyclique du signal de pilotage par modulation de largeur d'impulsions PWM_(sub)system relevé dépasse la valeur seuil de détection PWM_(sub)system_lim_i déterminée, la première phase P1 de régulation, est réitérée. Cela concerne les étapes E1 à E4 précédemment décrites. La valeur relevée du rapport cyclique peut dépasser la valeur seuil de détection, en étant supérieure ou inférieure, selon la nature des éléments résistifs. Par exemple, dans le cas d'éléments résistifs CTP, si la valeur relevée du rapport cyclique PWM_(sub)system est supérieure, plus précisément strictement supérieure à la valeur seuil de détection de rapport cyclique PWM_(sub)system_lim_i déterminée, cela signifie que le sous-système ou l'ensemble du dispositif est toujours en surchauffe, et la première phase P1 de régulation est réitérée.

À chaque itération i, la valeur seuil de détection du rapport cyclique du signal de pilotage PWM_(sub)system_lim_i est déterminée de nouveau en fonction de la valeur régulée de la consigne P_(sub)system_target_i ; T_(sub)system_target_i ; i_(sub)system_target_i ; R_(sub)system target i.

La première phase P1 de régulation est réitérée tant que le rapport cyclique du signal de pilotage par modulation de largeur d'impulsions PWM_(sub)system relevé dépasse la valeur seuil de détection PWM_(sub)system_lim_i déterminée.

Par exemple, selon le cas précédent d'une consigne de puissance et d'éléments résistifs CTP, la consigne de puissance P_(sub)system_target_i est abaissée graduellement selon le premier pas prédéfini, par exemple de $\frac{1}{16}$ de la consigne maximale autorisée à chaque itération i, tant que le rapport cyclique du signal de pilotage par modulation de largeur d'impulsions PWM_(sub)system relevé est supérieur, plus précisément strictement supérieur, à la valeur seuil de détection PWM_(sub)system_lim_i.

Afin de faciliter la compréhension et d'illustrer un exemple de mise en oeuvre de la première phase P1 de régulation, on se réfère de nouveau à l'exemple non limitatif de la figure 2. Durant la phase de déclassement, après un premier abaissement de la consigne de puissance P_(sub)system_target_i à 75% de la puissance maximale P_max, la valeur du rapport cyclique du signal de pilotage PWM_(sub)system est relevée et comparée à la valeur seuil de détection PWM_(sub)system_lim_i correspondante, dans cet exemple 61%. Si la valeur du rapport cyclique du signal de pilotage PWM_(sub)system relevée est supérieure à la valeur seuil de détection PWM_(sub)system_lim_i, la consigne de puissance est de nouveau abaissée. De façon arbitraire purement illustrative si la valeur du rapport cyclique du signal de pilotage PWM_(sub)system relevée est par exemple 72% alors que la valeur seuil est 61%, la phase de déclassement est réitérée.

La consigne de puissance P_(sub)system_target_i est donc de nouveau abaissée cette fois à 70% de la puissance maximale P_max et la valeur seuil de détection PWM_(sub)system_lim_i correspondante est dans cet exemple 56%. De façon arbitraire, purement illustrative, si la valeur du rapport cyclique du signal de pilotage PWM_(sub)system relevée est par exemple 63% alors que la valeur seuil est 56%, la phase de déclassement est de nouveau réitérée abaissant la consigne de puissance P_(sub)system_target_i à 65% de la puissance maximale P_max puis si besoin à 60% de la puissance maximale P_max, et ainsi de suite.

En se référant de nouveau à la figure 1, selon une option, les itérations i possibles de la première phase P1 de régulation peuvent être limitées.

Cette limitation peut être fonction d'une valeur limite de consigne P_(sub)system_target_m ; T_(sub)system_target_m ; i_(sub)system_target_m ; R_(sub)system target m. Cela signifie que si la valeur régulée de la consigne atteint ou dépasse la valeur limite de consigne, la première phase P1 n'est pas réitérée. Dans ce cas, le nombre d'itérations i peut varier de 1 à m, m correspondant à un nombre maximal d'itérations (voir figure 2).

La valeur limite de consigne peut être prédéfinie. Par exemple, en se référant également au tableau de la figure 2, dans le cas d'une première phase P1 de déclassement d'une consigne de puissance pour des éléments résistifs CTP et en considérant que la consigne de puissance initiale autorisée P_(sub)system_target_0, non limitée, est à 80% de la puissance maximale P_max, la valeur limite de consigne P_(sub)system_target_m peut être $\frac{4}{16}$ de la consigne de puissance maximale autorisée, ce qui correspond par exemple à 20% de la puissance maximale P_max. Dans l'exemple particulier d'une première phase de déclassement de la consigne de puissance selon un pas constant prédéfini de $\frac{1}{16}$ de la consigne maximale autorisée, la consigne de puissance P_(sub)system_target_i peut être abaissée m fois, qui correspond dans cet exemple à douze fois, avant d'atteindre la valeur limite P_(sub)system_target_m.

Si la valeur régulée de la consigne P_(sub)system_target_i atteint cette valeur limite de consigne P_(sub)system_target_m, soit si i = m, à l'issue de l'étape E4, la première phase P1 est arrêtée et une commande d'arrêt de l'alimentation électrique des éléments résistifs peut être générée à l'étape E5. L'arrêt de l'alimentation peut être d'une durée d'arrêt prédéfinie, qui peut être autour de 2mn, par exemple de 130s.

Dans le cas contraire, si la valeur régulée de la consigne P_(sub)system_target_i n'atteint pas la valeur limite de consigne P_(sub)system_target_m, soit si i ≠ m, à l'issue de l'étape E4, les étapes E1 à E4 peuvent être réitérées.

Selon une alternative, la valeur limite de consigne peut ne pas être prédéfinie mais être calculée au moyen d'un algorithme stocké dans une commande du dispositif de chauffage électrique. Un tel algorithme peut notamment prendre en compte de la température du support de circuit électrique.

La première phase P1 de régulation est avantageusement itérée ou réitérée selon une période prédéfinie. La période prédéfinie peut être inférieure à 10s, par exemple de l'ordre de 4s. Ceci permet de laisser le temps au dispositif de chauffage de réagir sans être trop lent.

De façon alternative, la période peut être variable. La période peut dépendre par exemple d'un degré de surchauffe. Ce degré de surchauffe peut être absolu ou un pourcentage entre le rapport cyclique du signal de pilotage par modulation de largeur d'impulsions PWM_(sub)system réel relevé et la valeur seuil de détection PWM_(sub)system_lim_i par exemple. La période peut être inversement liée au degré de surchauffe, autrement dit plus le degré de surchauffe est élevé, plus la période est diminuée.

**Deuxième phase de régulation** Si à l'issue de la comparaison de l'étape E4, le rapport cyclique du signal de pilotage par modulation de largeur d'impulsions PWM_(sub)system relevé ne dépasse pas la valeur seuil de détection PWM_(sub)system_lim_i, une deuxième phase P2 de régulation de la consigne, peut être activée. Il s'agit en particulier d'une phase de montée ou d'augmentation, durant laquelle la consigne est ré-augmentée.

En reprenant le cas particulier d'un dispositif de chauffage comprenant des éléments résistifs CTP, si la valeur relevée du rapport cyclique PWM_(sub)system est inférieure ou égale à la valeur seuil de détection de rapport cyclique PWM_(sub)system_lim_i, la première phase P1 est arrêtée et la deuxième phase de régulation P2 est activée.

La régulation durant la deuxième phase P2 se fait selon un deuxième sens d'évolution opposé au sens d'évolution de la première phase P1.

Par exemple, selon le cas précédent d'une consigne de puissance et d'éléments résistifs CTP, la consigne de puissance est remontée durant la deuxième phase P2 de régulation.

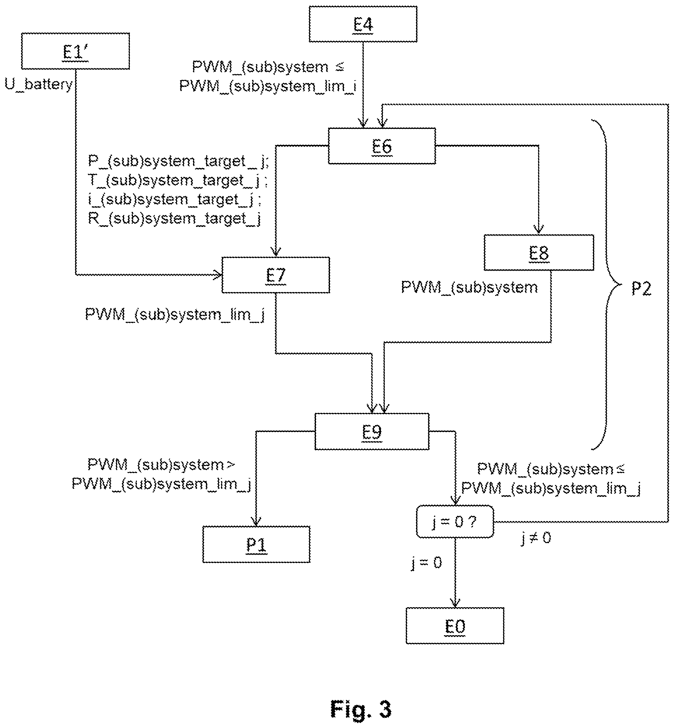

La deuxième phase P2 de régulation, notamment de montée ou d'augmentation, est avantageusement également graduelle. En référence à la figure 3, la deuxième phase P2 de régulation peut comprendre une étape E6 pour réguler la consigne selon le deuxième pas prédéfini. À chaque régulation d'ordre j, la consigne passe à une valeur régulée de consigne P_(sub)system_target_ j ; T_(sub)system_target_ j ; i_(sub)system_target_j ; R_(sub)system_target_j, selon le deuxième pas prédéfini.

Comme précédemment, ce pas est choisi selon un compromis entre l'inertie du dispositif de chauffage électrique et la réactivité souhaitée. Le deuxième pas prédéfini peut être constant. Il peut être égal au premier pas prédéfini. Dans ce cas, l'indice j est égal à l'indice i.

Le deuxième pas prédéfini est par exemple $\frac{1}{16}$ de la consigne maximale autorisée. Ainsi, selon l'exemple précédent, à chaque itération j de la deuxième phase P2 de montée, la consigne de puissance P_(sub)system_target_ j est remontée de $\frac{1}{16}$ de la consigne maximale autorisée.

Chaque niveau d'augmentation j correspond selon l'exemple décrit à un niveau de déclassement i par rapport à la consigne initiale.

En particulier, à la première itération de la deuxième phase P2 de régulation, la dernière valeur de consigne obtenue lors de la première phase P1 de régulation est régulée selon le deuxième pas prédéfini.

Par exemple de façon arbitraire purement illustrative en reprenant l'exemple précédent et en se référant également à la figure 2, si, après abaissement de la consigne de puissance P_(sub)system_target_i par exemple au facteur $F\frac{12}{16}$ correspondant à 60% de la puissance maximale P_max, la valeur du rapport cyclique du signal de pilotage PWM_(sub)system relevée est 45% alors que la valeur seuil est 47%, la phase de déclassement s'arrête et la deuxième phase P2 de montée est activée. Lors d'une première itération de l'étape E6, la consigne de puissance est remontée au facteur $F\frac{13}{16}$ correspondant par exemple à 65% de la puissance maximale P_max.

De façon alternative, le deuxième pas peut être variable.

La deuxième phase P2 de régulation comporte de plus une étape E7 de détermination d'une valeur seuil correspondante PWM_(sub)system_lim_ j de détection pour le rapport cyclique du signal de pilotage par modulation de largeur d'impulsions du nombre prédéfini d'éléments résistifs. Cette valeur seuil PWM_(sub)system_lim_ j peut être déterminée pour un ou plusieurs sous-systèmes, c'est-à-dire pour un ou plusieurs ensembles de modules chauffants commandés par un ou plusieurs transistors, ou pour tout le système c'est-à-dire l'ensemble des éléments résistifs pour tous les modules chauffants. La valeur seuil de détection PWM_(sub)system_lim_ j est représentative d'une surchauffe du sous-système ou de l'ensemble du système.

Cette valeur seuil PWM_(sub)system lim_ j est déterminée en fonction de la valeur régulée de consigne P_(sub)system_target_ j ; T_(sub)system_target_ j ; i_(sub)system_target_ j ; R_(sub)system_target_ j. La valeur seuil de détection pour le rapport cyclique du signal de pilotage PWM_(sub)system_lim_ j est de nouveau déterminée à chaque régulation j de consigne.

En particulier, la valeur seuil de détection PWM_(sub)system lim_ j peut être définie en fonction du couple de la tension d'alimentation U_battery et de la consigne régulée.

Comme précédemment, la valeur seuil de détection PWM_(sub)system_lim_j pour le rapport cyclique dudit signal de pilotage peut être lue dans un tableau basé sur la consigne et éventuellement sur la tension d'alimentation U_battery, le tableau étant stocké dans une commande du dispositif de chauffage électrique. L'exemple de valeurs seuil de détection PWM_(sub)system_lim_ j donné à titre illustratif à la figure 2 pour une tension U_battery constante par exemple de 306V, et considérant que la consigne de puissance maximale autorisée, non limitée, est à 80% de la puissance maximale P_max, peut s'appliquer également pour la deuxième phase P2.

Selon une autre alternative, il est envisageable que la valeur seuil de détection pour le rapport cyclique dudit signal de pilotage soit calculée au moyen d'un algorithme (non décrit plus en détail dans la présente) stocké dans une commande du dispositif de chauffage électrique.

Après régulation de la consigne, le rapport cyclique du signal de pilotage par modulation de largeur d'impulsions du nombre prédéfini d'éléments résistifs PWM_(sub)system peut être relevé lors d'une étape E8.

À l'étape E9, la valeur du rapport cyclique du signal de pilotage PWM_(sub)system relevée à l'étape E8 est comparée à la valeur seuil de détection du rapport cyclique dudit signal de pilotage PWM_(sub)system lim_ j correspondante déterminée à l'étape E7. Cette étape de comparaison E9 peut être mise en oeuvre par un moyen de traitement tel qu'un comparateur.

Si le rapport cyclique du signal de pilotage par modulation de largeur d'impulsions PWM_(sub)system relevé dépasse la valeur seuil de détection PWM_(sub)system_lim_ j déterminée, la première phase P1 est de nouveau activée. Cela concerne les étapes E1 à E4 précédemment décrites en référence à la figure 1.

La valeur relevée du rapport cyclique peut dépasser la valeur seuil de détection, en étant supérieure ou inférieure, selon la nature des éléments résistifs. Par exemple, dans le cas d'éléments résistifs CTP, si la valeur relevée du rapport cyclique est strictement supérieure à la valeur seuil de détection de rapport cyclique définie, cela signifie que le sous-système ou l'ensemble du dispositif est en surchauffe. Sinon, c'est-à-dire dans le cas d'éléments résistifs CTP, si le rapport cyclique du signal de pilotage par modulation de largeur d'impulsions PWM_(sub)system relevé est inférieur ou égal à la valeur seuil de détection PWM_(sub)system_lim_j déterminée, la deuxième phase de régulation P2 est réitérée.

Afin de faciliter la compréhension et d'illustrer un exemple de mise en oeuvre de la deuxième phase P2 de régulation, on se réfère également à l'exemple non limitatif de la figure 2 pour une consigne de puissance pour des éléments résistifs CTP, considérant la tension U_battery constante par exemple de 306V, et considérant que la consigne de puissance maximale autorisée, non limitée, est à 80% de la puissance maximale P_max.

Partant d'une consigne de puissance P_(sub)system_target_i abaissée lors de la première phase de déclassement à 60% de la puissance maximale P_max, la valeur du rapport cyclique du signal de pilotage PWM_(sub)system est relevée et comparée à la valeur seuil de détection PWM_(sub)system_lim_ i correspondante, dans cet exemple 47%. Si la valeur du rapport cyclique du signal de pilotage PWM_(sub)system relevée est inférieure ou égale à la valeur seuil de détection PWM_(sub)system_lim_ i la phase de déclassement s'arrête et la deuxième phase P2 de montée est activée. Par exemple de façon arbitraire purement illustrative, la valeur du rapport cyclique du signal de pilotage PWM_(sub)system relevée à est 45% alors que la valeur seuil est 47%. La consigne de puissance est remontée

$$\frac{13}{16}$$

à de la consigne de puissance maximale autorisée correspondant par exemple à 65% de la puissance maximale P_max.

Après cette régulation de la consigne de puissance, la valeur du rapport cyclique du signal de pilotage PWM_(sub)system est de nouveau relevée et comparée à la valeur seuil de détection PWM_(sub)system lim_ j correspondante, dans cet exemple 52%. Si la valeur du rapport cyclique du signal de pilotage PWM_(sub)system relevée est supérieure à cette nouvelle valeur seuil de détection PWM_(sub)system lim_ j, par exemple si elle est égale à 55%, la première phase P1 est de nouveau

$$\frac{1}{16}$$

activée et la consigne de puissance est abaissée de passant de nouveau à 60% de la puissance maximale P_max.

Au contraire, si la valeur du rapport cyclique du signal de pilotage PWM_(sub)system relevée est inférieure ou égale à la nouvelle valeur seuil de détection PWM_(sub)system lim_ j, par exemple si elle est égale à 52%, la deuxième phase P2 peut être réitérée pour augmenter la consigne de puissance P_(sub)system target_ j à 70% de la puissance maximale P_max, et ainsi de suite.

Comme précédemment, les itérations j possibles de la deuxième phase P2 de régulation sont limitées. La deuxième phase P2 de régulation peut être réitérée jusqu'à atteindre la valeur maximale autorisée de consigne, par exemple jusqu'à atteindre la valeur de consigne de puissance maximale autorisée ou consigne non limitée du moment, qui peut ou non être la valeur initiale P_(sub)system target 0 correspondant à titre d'exemple non limitatif à 80% de la puissance maximale P_max. La consigne du moment peut avoir évolué par rapport à la consigne initiale.

Si la valeur régulée de la consigne P_(sub)system_target_ j atteint cette valeur de consigne du moment, par exemple si j = 0, à l'issue de l'étape E9, la deuxième phase P2 et la stratégie de gestion thermique sont arrêtées. Le procédé est réitéré depuis le début.

Dans le cas contraire, si la valeur régulée de la consigne P_(sub)system_target_ j n'atteint pas la valeur maximale autorisée de consigne ou consigne non limitée du moment, par exemple si j ≠ 0, les étapes E6 à E9 peuvent être réitérées.

La deuxième phase P2 de régulation est avantageusement itérée ou réitérée selon une période prédéfinie, qui peut être la même que pour la première phase P1 de régulation.

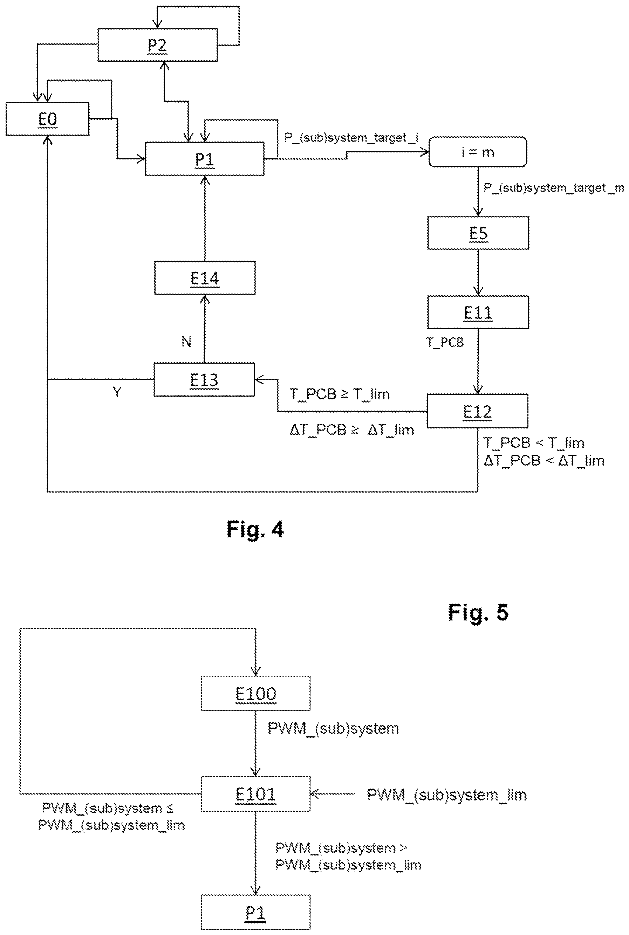

**Phase de reprise** En se référant à la figure 4, après coupure de l'alimentation électrique des éléments résistifs à l'étape E5, notamment si, lors d'une itération de la première phase P1 de régulation, telle qu'une phase de déclassement ou « derating » en anglais, la valeur régulée de la consigne, par exemple de puissance P_(sub)system_target_i sur la figure 4, atteint la valeur limite de consigne, par exemple de puissance P_(sub)system_target_m sur la figure 4, soit si i = m, le procédé peut comprendre une étape pour générer une commande de reprise de l'alimentation électrique des éléments résistifs.

La commande de reprise de l'alimentation électrique peut être générée à la fin de la durée d'arrêt prédéfinie, qui peut être autour de 2mn, par exemple de 130s.

De façon alternative, la commande de reprise de l'alimentation électrique peut être tributaire d'au moins un critère prédéfini. Dans ce cas le procédé comporte en outre une ou plusieurs étapes pour vérifier un tel critère.

Le critère est par exemple la température du support de circuit électrique sur lequel est monté le circuit d'alimentation électrique des éléments résistifs. Dans ce cas, lors d'une étape E11, la température T_PCB du support du circuit d'alimentation électrique des éléments résistifs peut être relevée. La température du support de circuit électrique est relevée, par exemple par un capteur de température, tel qu'une sonde thermique à coefficient de température négatif.

Le procédé peut comprendre une ou plusieurs étapes pour déterminer en fonction de la température du support T_PCB relevée, si le ou les sous-ensembles d'éléments résistifs se trouvent dans un état d'échauffement minimal.

Selon un premier mode de réalisation, la température du support T_PCB relevée est comparée à l'étape E12 à une température limite T_lim prédéfinie représentative d'un échauffement minimal. La température limite T_lim prédéfinie est à titre d'exemple illustratif égale à ou autour de 70°C.

Si la température du support T_PCB relevée est inférieure à la température limite T_lim prédéfinie, il n'y a pas d'échauffement minimal détecté, la première phase P1 de régulation n'est pas de nouveau activée et le procédé peut être réitéré depuis le début. En l'absence de détection d'un état d'échauffement minimal, l'alimentation électrique peut recommencer avec une consigne correspondant au minimum entre la consigne reçue de l'unité de commande pilotant les éléments résistifs et la consigne maximale autorisée. L'évolution du rapport cyclique du signal de pilotage par modulation de largeur d'impulsions PWM_(sub)system peut être surveillée pour détecter la surchauffe d'éléments résistifs du dispositif de chauffage électrique.

À l'inverse, si la température du support T_PCB relevée est supérieure ou égale à la température limite T_lim prédéfinie, le procédé peut comprendre une étape E13 dans laquelle la consigne reçue de l'unité de commande pilotant les éléments résistifs est comparée à une valeur de consigne de reprise prédéfinie. Avantageusement, cette valeur de consigne de reprise prédéfinie est inférieure ou égale à la valeur maximale autorisée de consigne. Cette valeur de consigne de reprise est définie indépendamment de la table de valeurs de rapport cyclique. Par exemple, dans le cas d'une consigne de puissance, la valeur de consigne de puissance de reprise peut être 55% de la consigne de puissance maximale.

Si la consigne reçue de l'unité de commande est inférieure à la valeur de consigne de reprise, par exemple 55% de la consigne de puissance maximale (flèche Y), il n'est pas nécessaire de réguler la consigne selon la première phase P1 telle que la phase de déclassement de la consigne de puissance. La première phase P1 de régulation n'est pas de nouveau activée et le procédé peut être réitéré depuis le début, selon la consigne reçue de l'unité de commande pilotant les éléments résistifs.

À l'inverse, si la consigne reçue de l'unité de commande est supérieure ou égale à la valeur de consigne de reprise, par exemple 55% de la consigne de puissance maximale (flèche N), dans ce cas la consigne est limitée à l'étape E14 à cette valeur de consigne de reprise. L'alimentation électrique des éléments résistifs recommence donc avec une valeur de consigne limitée, fixée à la valeur prédéterminée de reprise et la première phase P1 de régulation est de nouveau activée.

Par la suite, selon la situation, il est possible que la régulation de la consigne reparte à la hausse, c'est-à-dire selon la deuxième phase P2 qui correspond à une phase de montée dans l'exemple particulier décrit de consigne de puissance d'éléments résistifs CTP, ceci est notamment si le système est suffisamment froid, ventilé. La régulation de la consigne peut aussi repartir à la baisse, c'est-à-dire selon la première phase P1 qui correspond à une phase de déclassement dans l'exemple précédent.

Selon un deuxième mode de réalisation, la variation de température $\Delta$T_PCB du support du circuit d'alimentation électrique des éléments résistifs peut être surveillée sur une période de temps prédéfinie, par exemple sur la durée prédéfinie d'arrêt de l'alimentation électrique des éléments résistifs. À l'étape E12, cette variation de température $\Delta$T_PCB du support est comparée à une variation de température limite $\Delta$T_lim prédéfinie représentative de l'échauffement minimal du dispositif de chauffage électrique. La variation de température limite $\Delta$T_lim prédéfinie est par exemple égale à - 10°C ou environ.

Si la variation de température est inférieure à la variation de température limite prédéfinie, selon l'exemple précédent, si la température a baissé de 10°C ou plus, la baisse de température est considérée comme suffisante et la première phase P1 de régulation n'est pas de nouveau activée. Le procédé peut être réitéré depuis le début, selon la consigne reçue de l'unité de commande pilotant les éléments résistifs.

À l'inverse, si la variation de température est supérieure ou égale à la variation de température limite prédéfinie, selon l'exemple précédent, si la température n'a pas baissé de 10°C ou plus, à l'étape E13, la consigne reçue de l'unité de commande peut être comparée à la valeur de consigne de reprise prédéfinie. Comme décrit précédemment, si la consigne reçue de l'unité de commande est inférieure à la valeur de consigne de reprise, (flèche Y), il n'est pas nécessaire de réguler la consigne selon la première phase P1. Sinon, la consigne est limitée à l'étape E14 à la valeur de consigne de reprise, et la première phase P1 de régulation est de nouveau activée.

**Détection de surchauffe initiale** Par ailleurs, en se référant à la figure 5, antérieurement à l'activation de la première phase P1 de régulation, la détection d'une surchauffe d'au moins un sous-ensemble d'éléments résistifs du dispositif de chauffage électrique, peut se faire lorsque le rapport cyclique du signal de pilotage par modulation de largeur d'impulsions PWM_(sub)system dépasse une valeur seuil prédéfinie de détection de rapport cyclique du signal de pilotage par modulation de largeur d'impulsions PWM_(sub)system_lim représentative d'une surchauffe. Pour ce faire, les étapes ci-après peuvent être mises en oeuvre.

Lors d'une étape préalable, une condition de température ou de variation de température suffisante, du support de circuit électrique sur lequel est monté le circuit d'alimentation électrique des éléments résistifs, peut être vérifiée afin de s'assurer que les éléments résistifs sont dans un état d'échauffement minimal. Ceci peut se faire de façon similaire aux étapes E11 et E12 précédemment décrites.

Lors d'une étape E100, le rapport cyclique du signal de pilotage par modulation de largeur d'impulsions PWM_(sub)system pour un sous-système, respectivement pour l'ensemble des éléments résistifs, peut être relevé.

À l'étape E101, la valeur relevée du rapport cyclique du signal de pilotage par modulation de largeur d'impulsions PWM_(sub)system peut être comparée à une valeur seuil de détection de rapport cyclique du signal de pilotage par modulation de largeur d'impulsions du nombre prédéfini d'éléments résistifs PWM_(sub)system_lim, la valeur seuil de détection étant représentative d'une surchauffe du dispositif de chauffage électrique. Cette valeur seuil de détection du rapport cyclique PWM_(sub)system_lim peut être définie au moins en fonction de la consigne, de préférence la consigne de puissance. En particulier, la valeur seuil de détection PWM_(sub)system_lim est définie en fonction du couple de la tension d'alimentation et de la consigne.

Une surchauffe est détectée en fonction du résultat de comparaison. Plus précisément, une surchauffe du dispositif est détectée si la valeur relevée du rapport cyclique PWM_(sub)system dépasse la valeur seuil de détection de rapport cyclique définie PWM_(sub)system_lim, en étant supérieure ou inférieure, selon la nature des éléments résistifs. Pour des éléments résistifs à coefficient de température positif CTP par exemple, il y a détection d'une surchauffe, lorsque la valeur relevée du rapport cyclique PWM_(sub)system est supérieure, par exemple strictement supérieure, à la valeur seuil de détection de rapport cyclique définie PWM_(sub)system_lim. Dans ce cas, la première phase P1 de régulation précédemment décrite est activée. À l'inverse, si la valeur relevée du rapport cyclique PWM_(sub)system est inférieure ou égale à la valeur seuil de détection de rapport cyclique PWM_(sub)system_lim, il n'y a pas de surchauffe détectée la première phase P1 de régulation n'est pas activée.

En variante ou en complément, un ou plusieurs autres paramètres, par exemple fonction de l'intensité, peuvent être utilisés pour la surveillance d'une surchauffe du dispositif de chauffage électrique.

Lorsque les éléments résistifs sont du type à coefficient de température négatif CTN, les rapports sont inversés par rapport aux éléments résistifs à coefficient de température positif CTP. Ainsi, par exemple, pour des éléments résistifs CTN, une surchauffe est détectée si la valeur relevée du rapport cyclique PWM_(sub)system est inférieure à la valeur seuil de détection PWM_(sub)system_lim, respectivement PWM_(sub)system_lim_i lors de l'itération de la première phase P1 de régulation, respectivement PWM_(sub)system_lim_j, lors de l'itération de la deuxième phase P2 de régulation.

Dans la description ci-dessus, les étapes E0 à E14 sont indexées. Il s'agit d'un simple indexage pour différencier et dénommer les différentes étapes du procédé. Cette indexation n'implique pas forcément une priorité d'une étape par rapport à une autre. L'ordre de certaines étapes de ce procédé peut être interverti sans sortir du cadre de la présente description. Cette indexation n'implique pas non plus un ordre dans le temps. Certaines étapes peuvent par exemple être réalisées en même temps.

**UNITE DE COMMANDE** La mise en oeuvre du procédé de gestion thermique tel que décrit précédemment peut se faire par une unité de commande (non représentée sur les figures). Il s'agit d'une unité de commande électronique. En particulier, le procédé de gestion thermique peut être mis en oeuvre par l'unité de commande déjà prévue pour commander les modules chauffants du dispositif de chauffage électrique et/ou pour détecter une surchauffe.

L'unité de commande comporte au moins un moyen de traitement pour mettre en oeuvre les étapes du procédé de gestion thermique décrit précédemment en référence à l'ensemble des figures.

De façon générale, l'unité de commande peut comporter un ou plusieurs moyens de traitement tel qu'un moyen de calcul ou microprocesseur pour activer, si une surchauffe est préalablement détectée, une première phase P1 de régulation de la consigne selon un premier sens d'évolution. Le ou les moyens de traitement sont également configurés pour activer une deuxième phase P2 de régulation de la consigne selon un deuxième sens d'évolution, lorsqu'il n'y a plus de surchauffe détectée après une ou plusieurs itérations de la première phase P1 de régulation.

En particulier, l'unité de commande comporte un ou plusieurs moyens de traitement pour relever la consigne de puissance, ou de température, ou d'intensité de courant électrique, ou encore de résistance, et pour réguler la consigne, par exemple en l'abaissant ou en l'augmentant, selon la phase de régulation P1 ou P2 en cours.

L'unité de commande peut comporter un comparateur pour comparer une requête de consigne d'un utilisateur à une consigne maximale autorisée, ou encore à une consigne de reprise prédéfinie suite à un arrêt de l'alimentation électrique des éléments résistifs.

L'unité de commande comporte par exemple un capteur de mesure de tension pour mesurer ou relever la tension d'alimentation U_battery.

L'unité de commande comporte par exemple un moyen de traitement pour déterminer ou relever le rapport cyclique du signal de pilotage par modulation de largeur d'impulsions du nombre prédéfini d'éléments résistifs PWM_(sub)system.

L'unité de commande peut comporter par exemple un calculateur pour déterminer, une valeur seuil de détection de rapport cyclique du signal de pilotage par modulation de largeur d'impulsions du nombre prédéfini d'éléments résistifs PWM_(sub)system_lim, respectivement PWM_(sub)system_lim_i, respectivement PWM_(sub)system_lim_j, la valeur seuil étant représentative d'une surchauffe du dispositif de chauffage électrique et étant définie en fonction de la consigne, ou en variante en fonction du couple de la tension d'alimentation et de la consigne.

L'unité de commande comporte par exemple au moins un comparateur pour comparer la valeur relevée dudit rapport cyclique PWM_(sub)system à la valeur seuil de détection PWM_(sub)system_lim, respectivement PWM_(sub)system_lim_i, respectivement PWM_(sub)system_lim_j.

Ce comparateur ou un autre comparateur peut être configuré pour comparer une valeur régulée de consigne à une valeur limite de consigne à ne pas dépasser lors de la mise en oeuvre de la première phase P1 de régulation.

L'unité de commande peut comporter un moyen de calcul ou microprocesseur pour déterminer en fonction des résultats des comparaisons s'il y a une surchauffe. Notamment le microprocesseur peut évaluer si la valeur relevée dudit rapport cyclique atteint voire dépasse (en étant supérieure ou inférieure selon la nature des éléments résistifs) la valeur seuil de détection de rapport cyclique définie afin de détecter une surchauffe et activer ou réitérer la première phase P1 de régulation. Le microprocesseur peut évaluer lorsque la valeur relevée dudit rapport cyclique ne dépasse plus (en étant supérieure ou inférieure selon la nature des éléments résistifs) la valeur seuil de détection de rapport cyclique définie afin d'activer la deuxième phase P2 de régulation.

L'unité de commande peut comporter un autre ou le même moyen de calcul ou microprocesseur pour générer une commande d'arrêt de l'alimentation électrique des éléments résistifs pendant une durée d'arrêt prédéfinie, lorsqu'une valeur régulée de consigne atteint la valeur limite de consigne définie pour la première phase P1 de régulation.

L'unité de commande peut également comporter au moins un moyen de traitement pour vérifier si un critère du dispositif de chauffage électrique est représentatif d'un état d'échauffement minimal. Par exemple, on peut prévoir un capteur de température du support du circuit d'alimentation des éléments résistifs. L'unité de commande peut comporter ce capteur de température additionnel. Un tel capteur de température peut être placé sur la carte à circuit imprimé PCB, par exemple en étant soudé, brasé, ou collé. Il peut s'agir d'une sonde thermique à coefficient de température négatif (CTN) dont la résistance électrique diminue de façon uniforme avec la température. En alternative, il pourrait s'agir d'une sonde thermique à coefficient de température positif (CTP), dont la résistance électrique augmente fortement avec la température.

L'unité de commande peut comporter par exemple un comparateur pour comparer la température T_PCB du support de circuit électrique relevée, respectivement une variation de température ΔT_PCB, à un seuil prédéfini T_lim, respectivement une variation de température limite ΔT_lim, correspondant à un échauffement minimal du dispositif de chauffage électrique.

Le ou un autre moyen de calcul ou microprocesseur peut en fonction des résultats des comparaisons, réactiver la première phase P1 de régulation, avantageusement selon une consigne limitée, lorsque la température T_PCB ou la variation de température ΔT_PCB du support de circuit électrique correspond à un échauffement minimal.

Ainsi, en régulant graduellement la consigne, par exemple de puissance, et en adaptant à chaque régulation la valeur seuil de détection du rapport cyclique du signal de pilotage par modulation de largeur d'impulsions, le procédé selon l'invention permet d'agir en temps réel en cas de surchauffe afin d'éviter au dispositif de chauffage électrique d'atteindre un niveau de température critique qui risquerait de dégrader certains composants alentours.

**Revendications**

1. Procédé de gestion thermique en cas de détection de surchauffe d'un dispositif de chauffage électrique, notamment pour véhicule automobile, ledit dispositif comportant une pluralité d'éléments résistifs présentant une valeur résistive variant en fonction de la température, ces éléments résistifs étant configurés pour être alimentés électriquement par une source de tension électrique, dans lequel l'alimentation électrique d'au moins un sous-ensemble d'éléments résistifs est pilotée à l'aide d'un signal de pilotage par modulation de largeur d'impulsions en fonction d'une consigne de puissance (P_(sub)system_target_0), ou de température (T_(sub)system_target_0), ou d'intensité de courant électrique (i_(sub)system_target_0), ou de résistance (R_(sub)system_target_0), **caractérisé en ce que** ledit procédé comprend les étapes suivantes :

   a. activer une première phase (P1) de régulation graduelle de ladite consigne selon un premier sens d'évolution, qui est soit une baisse soit une augmentation, la première phase (P1) de régulation comprenant les sous-étapes (E1-E4) suivantes :

  i. réguler (E1) ladite consigne en la modifiant dans le premier sens d'évolution selon un premier pas prédéfini,
  ii. déterminer (E2) une valeur seuil du rapport cyclique en fonction de la valeur régulée de la consigne, cette valeur seuil étant représentative d'une surchauffe dudit au moins un sous-ensemble d'éléments résistifs,
  iii. relever (E3) et comparer (E4) le rapport cyclique à la valeur seuil déterminée,

  b. réitérer la première phase (P1) de régulation tant que le rapport cyclique dépasse la valeur seuil déterminée,
  c. si le rapport cyclique ne dépasse pas la valeur seuil déterminée, activer une deuxième phase (P2) de régulation de ladite consigne, selon un deuxième sens d'évolution opposé au sens d'évolution de la première phase (P1), c'est-à-dire une baisse si le premier sens d'évolution est une augmentation et une augmentation si le premier sens d'évolution est une baisse.

2. Procédé selon la revendication précédente, dans lequel le premier sens d'évolution est une baisse.

3. Procédé selon l'une des revendications précédentes, dans lequel la deuxième phase (P2) de régulation est graduelle et comprend les sous-étapes (E6-E9) suivantes :

  a. réguler (E6) ladite consigne en la modifiant dans le deuxième sens d'évolution selon un deuxième pas prédéfini,
  b. déterminer (E7) une valeur seuil du rapport cyclique en fonction de la valeur régulée de la consigne, cette valeur seuil étant représentative d'une surchauffe dudit au moins un sous-ensemble d'éléments résistifs,
  c. relever (E8) et comparer (E9) le rapport cyclique à la valeur seuil déterminée à la dernière itération de la deuxième phase (P2),
  dans lequel la deuxième phase (P2) est réitérée tant que le rapport cyclique ne dépasse pas la valeur seuil déterminée à la dernière itération de la deuxième phase (P1),
  et dans lequel si, à la dernière itération de la deuxième phase (P2), le rapport cyclique dépasse la valeur seuil, activer de nouveau la première phase (P1).

4. Procédé selon les revendications 2 et 3, dans lequel le deuxième sens d'évolution est croissant.

5. Procédé selon l'une quelconque des revendications précédentes, comprenant une étape (E1') pour mesurer la tension d'alimentation (U_battery), et dans lequel, dans chaque première phase (P1), la valeur seuil est déterminée en fonction de la tension d'alimentation (U_battery) mesurée, en plus de la consigne modifiée.

6. Procédé selon l'une quelconque des revendications précédentes, comprenant les étapes suivantes :

  a. durant la première phase (P1) de régulation, comparer la valeur régulée de ladite consigne à une valeur limite de consigne (P_(sub)system target m ; T_(sub)system_target_m ; i_(sub)system_target_m ; R_(sub)system_target_m),
  b. si consigne modifiée atteint la valeur limite de consigne (P_(sub)system target m ; T_(sub)system target m ; i_(sub)system target m ; R_(sub)system_target_m), générer (E5) une commande d'arrêt de l'alimentation électrique dudit au moins un sous-ensemble d'éléments résistifs pendant une durée d'arrêt prédéfinie.

7. Procédé selon la revendication précédente, comportant une étape pour générer une commande de reprise de l'alimentation électrique dudit au moins un sous-ensemble d'éléments résistifs avec une consigne de reprise fixée à une valeur prédéterminée inférieure ou égale à une valeur maximale autorisée de consigne (P_(sub)system target 0 ; T_(sub)system target 0 ; i_(sub)system target 0 ; R_(sub)system target 0).

8. Procédé selon l'une quelconque des revendications précédentes, comportant en outre les étapes suivantes :

  a. relever (E11) la température (T_PCB) d'un support du circuit d'alimentation électrique des éléments résistifs,
  b. déterminer (E12) en fonction de la température relevée (T_PCB) si ledit au moins un sous-ensemble d'éléments résistifs est dans un état d'échauffement minimal, et
  c. activer la première phase (P1) de régulation lorsqu'un état d'échauffement minimal dudit au moins un sous-ensemble d'éléments résistifs est déterminé.

9. Procédé selon les revendications 7 et 8, dans lequel :

  a. la température (T_PCB) dudit support est relevée postérieurement à l'arrêt de durée prédéfinie de l'alimentation électrique dudit au moins un sous-ensemble d'éléments résistifs, et dans lequel

b. la commande de reprise de l'alimentation électrique dudit au moins un sous-ensemble d'éléments résistifs est générée (E14) avec une consigne de reprise si un état d'échauffement minimal dudit au moins un sous-ensemble d'éléments résistifs est déterminé en fonction de la température (T_PCB) dudit support relevée.

10. Procédé selon l'une quelconque des revendications précédentes, dans lequel les éléments résistifs sont du type à coefficient de température positif, la consigne est une consigne de puissance, et le premier sens d'évolution est une baisse.

11. Procédé selon l'une des revendications précédentes, dans lequel la première phase (P1) et/ou deuxième phase (P2) de régulation est itérée selon une période prédéfinie.

12. Procédé selon l'une quelconque des revendications 1 à 11, dans lequel ledit premier et/ou deuxième pas prédéfini est constant.

13. Procédé selon l'une quelconque des revendications 1 à 11, dans lequel ledit premier et/ou deuxième pas prédéfini est variable.

14. Procédé selon l'une quelconque des revendications précédentes, dans lequel :

    a. au moins deux sous-ensembles d'éléments résistifs distincts sont pilotés de façon indépendante par modulation de largeur d'impulsions l'alimentation électrique, et dans lequel
    b. pour chaque sous-ensemble, une valeur seuil de détection de rapport cyclique du signal de pilotage est définie de façon indépendante, selon la nature et/ou le nombre des éléments résistifs du sous-ensemble.

15. Unité de commande pour un dispositif de chauffage électrique comportant une pluralité d'éléments résistifs présentant une valeur résistive variant en fonction de la température, ces éléments résistifs étant configurés pour être alimentés électriquement par une source de tension électrique, l'unité de commande étant configurée pour générer un signal de pilotage par modulation de largeur d'impulsions de l'alimentation électrique des éléments résistifs en fonction d'une consigne de puissance ($P\_{sub}system\_target\_0$), ou de température ($T\_{sub}system\_target\_0$), ou d'intensité de courant électrique ($i\_{sub}system\_target\_0$), ou de résistance ($R\_{sub}system\_target\_0$), **caractérisée en ce que** l'unité de commande comporte au moins un moyen de traitement pour :

    a. activer une première phase (P1) de modification graduelle de ladite consigne selon un premier sens d'évolution, croissant ou bien décroissant, la première phase (P1) de régulation comprenant les sous-étapes (E1-E4) suivantes :

        i. modifier (E1) ladite consigne dans le premier sens d'évolution selon un premier pas prédéfini,
        ii. déterminer (E2) une valeur seuil du rapport cyclique en fonction de la consigne modifiée, cette valeur seuil étant représentative d'une surchauffe dudit au moins un sous-ensemble d'éléments résistifs,
        iii. relever (E3) et comparer (E4) le rapport cyclique à la valeur seuil déterminée,

    b. réitérer la première phase (P1) de régulation tant que le rapport cyclique dépasse la valeur seuil déterminée à la dernière itération de la première phase (P1),
    c. si, à la dernière itération de la première phase (P1), le rapport cyclique ne dépasse pas la valeur seuil déterminée, activer une deuxième phase (P2) de modification de ladite consigne, selon un deuxième sens d'évolution opposé au sens d'évolution de la première phase (P1), c'est-à-dire décroissant si le premier sens d'évolution est croissant et croissant si le premier sens d'évolution est décroissant.

**Patentansprüche**

1. Verfahren zum thermischen Management im Fall einer Detektion einer Überhitzung einer elektrischen Heizvorrichtung, insbesondere für ein Kraftfahrzeug, wobei die Vorrichtung eine Vielzahl von Widerstandselementen umfasst, die einen in Abhängigkeit von der Temperatur variierenden Widerstandswert aufweisen, wobei diese Widerstandselemente dazu konfiguriert sind, von einer elektrischen Spannungsquelle mit Strom versorgt zu werden, wobei die Stromversorgung mindestens eines Teilsatzes von Widerstandselementen mit Hilfe eines pulsbreitenmodulierten Ansteuerungssignals in Abhängigkeit von einem Sollwert einer Leistung ($P\_{sub}system\_target\_0$) oder einer Temperatur ($T\_{sub}system\_target\_0$) oder einer elektrischen Stromstärke ($i\_{sub}system\_target\_0$) oder eines Widerstands ($R\_{sub}system\_target\_0$) angesteuert wird, **dadurch gekennzeichnet, dass** das Verfahren die folgenden Schritte beinhaltet:

    a. Aktivieren einer ersten Phase (P1) zur graduellen Regulierung des Sollwerts gemäß einer ersten Verlaufsrichtung, die entweder eine Verminderung oder eine Erhöhung ist, wobei die erste Regulierungsphase (P1) die folgenden Unterschritte (E1-E4) beinhaltet:

i. Regulieren (E1) des Sollwerts, indem er gemäß einer ersten vordefinierten Schrittweite in der ersten Verlaufsrichtung modifiziert wird,
ii. Bestimmen (E2) eines Schwellenwerts des Tastverhältnisses in Abhängigkeit von dem regulierten Wert des Sollwerts, wobei dieser Schwellenwert für eine Überhitzung des mindestens einen Teilsatzes von Widerstandselementen repräsentativ ist,
iii. Erfassen (E3) und Vergleichen (E4) des Tastverhältnisses mit dem bestimmten Schwellenwert,

b. Wiederholen der ersten Regulierungsphase (P1), solange das Tastverhältnis den bestimmten Schwellenwert überschreitet,
c. wenn das Tastverhältnis den bestimmten Schwellenwert nicht überschreitet, Aktivieren einer zweiten Phase (P2) zur Regulierung des Sollwerts gemäß einer zweiten Verlaufsrichtung, die zu der Verlaufsrichtung der ersten Phase (P1) entgegengesetzt ist, das heißt eine Verminderung, wenn die erste Verlaufsrichtung eine Erhöhung ist, und eine Erhöhung, wenn die erste Verlaufsrichtung eine Verminderung ist.

2. Verfahren nach dem vorhergehenden Anspruch, wobei die erste Verlaufsrichtung eine Verminderung ist.

3. Verfahren nach einem der vorhergehenden Ansprüche, wobei die zweite Regulierungsphase (P2) graduell ist und die folgenden Unterschritte (E6-E9) beinhaltet:

a. Regulieren (E6) des Sollwerts, indem er gemäß einer zweiten vordefinierten Schrittweite in der zweiten Verlaufsrichtung modifiziert wird,
b. Bestimmen (E7) eines Schwellenwerts des Tastverhältnisses in Abhängigkeit von dem regulierten Wert des Sollwerts, wobei dieser Schwellenwert für eine Überhitzung des mindestens einen Teilsatzes von Widerstandselementen repräsentativ ist,
c. Erfassen (E8) und Vergleichen (E9) des Tastverhältnisses mit dem bei der letzten Wiederholung der zweiten Phase (P2) bestimmten Schwellenwert,
wobei die zweite Phase (P2) wiederholt wird, solange das Tastverhältnis den bei der letzten Wiederholung der zweiten Phase (P1) bestimmten Schwellenwert nicht überschreitet,
und wobei, wenn bei der letzten Wiederholung der zweiten Phase (P2) das Tastverhältnis den Schwellenwert überschreitet, die erste Phase (P1) erneut aktiviert wird.

4. Verfahren nach den Ansprüchen 2 und 3, wobei die zweite Verlaufsrichtung zunehmend ist.

5. Verfahren nach einem beliebigen der vorhergehenden Ansprüche, das einen Schritt (E1') zum Messen der Versorgungsspannung (U_battery) beinhaltet, und wobei in jeder ersten Phase (P1) der Schwellenwert neben dem modifizierten Sollwert auch in Abhängigkeit von der gemessenen Versorgungsspannung (U_battery) bestimmt wird.

6. Verfahren nach einem beliebigen der vorhergehenden Ansprüche, das die folgenden Schritte beinhaltet:

a. während der ersten Regulierungsphase (P1), Vergleichen des regulierten Werts des Sollwerts mit einem Sollgrenzwert (P_(sub)system_target_m; T_(sub)system_target_m; i_(sub)system_target_m; R_(sub)system_target_m) ,
b. wenn der modifizierte Sollwert den Sollgrenzwert (P_(sub)system_target_m; T_(sub)system_target_m; i_(sub)system_target_m; R_(sub)system_target_m) erreicht, Erzeugen (E5) eines Befehls zur Abschaltung der Stromversorgung des mindestens einen Teilsatzes von Widerstandselementen für eine vordefinierte Abschaltdauer.

7. Verfahren nach dem vorhergehenden Anspruch, das einen Schritt zur Erzeugung eines Befehls zur Wiederherstellung der Stromversorgung des mindestens einen Teilsatzes von Widerstandselementen mit einem Wiederherstellungssollwert umfasst, der auf einen vorbestimmten Wert festgelegt ist, der kleiner als oder gleich einem maximal zulässigen Sollwert (P_(sub)system_target_0; T_(sub)system_target_0; i_(sub)system_target_0; R_(sub) system_target_0) ist.

8. Verfahren nach einem beliebigen der vorhergehenden Ansprüche, das ferner die folgenden Schritte umfasst:

a. Erfassen (E11) der Temperatur (T_PCB) eines Trägers der Stromversorgungsschaltung der Widerstandselemente,
b. Bestimmen (E12), in Abhängigkeit von der erfassten Temperatur (T_PCB), ob sich der mindestens eine Teilsatz von Widerstandselementen in einem Zustand minimaler Erwärmung befindet, und

c. Aktivieren der ersten Regulierungsphase (P1), wenn ein Zustand minimaler Erwärmung des mindestens einen Teilsatzes von Widerstandselementen bestimmt wird.

9. Verfahren nach den Ansprüchen 7 und 8, wobei:

a. die Temperatur (T_PCB) des Trägers nach der Abschaltung vordefinierter Dauer der Stromversorgung des mindestens einen Teilsatzes von Widerstandselementen erfasst wird und wobei

b. der Befehl zur Wiederherstellung der Stromversorgung des mindestens einen Teilsatzes von Widerstandselementen mit einem Wiederherstellungssollwert erzeugt wird (E14), wenn ein Zustand minimaler Erwärmung des mindestens einen Teilsatzes von Widerstandselementen in Abhängigkeit von der erfassten Temperatur (T_PCB) des Trägers bestimmt wird.

10. Verfahren nach einem beliebigen der vorhergehenden Ansprüche, wobei die Widerstandselemente vom Typ mit positivem Temperaturkoeffizienten sind, der Sollwert ein Leistungssollwert ist und die erste Verlaufsrichtung eine Verminderung ist.

11. Verfahren nach einem der vorhergehenden Ansprüche, wobei die erste Regulierungsphase (P1) und/oder die zweite Regulierungsphase (P2) gemäß einer vordefinierten Periode wiederholt wird.

12. Verfahren nach einem beliebigen der Ansprüche 1 bis 11, wobei die erste und/oder die zweite vordefinierte Schrittweite konstant ist.

13. Verfahren nach einem beliebigen der Ansprüche 1 bis 11, wobei die erste und/oder die zweite vordefinierte Schrittweite variabel ist.

14. Verfahren nach einem beliebigen der vorhergehenden Ansprüche, wobei:

a. mindestens zwei unterschiedliche Teilsätze von Widerstandselementen durch Pulsbreitenmodulation der Stromversorgung unabhängig angesteuert werden und wobei

b. für jeden Teilsatz ein Detektionsschwellenwert des Tastverhältnisses des Ansteuerungssignals je nach der Art und/oder der Anzahl der Widerstandselemente des Teilsatzes unabhängig definiert wird.

15. Steuereinheit für eine elektrische Heizvorrichtung, die eine Vielzahl von Widerstandselementen umfasst, die einen in Abhängigkeit von der Temperatur variierenden Widerstandswert aufweisen, wobei diese Widerstandselemente dazu konfiguriert sind, von einer elektrischen Spannungsquelle mit Strom versorgt zu werden, wobei die Steuereinheit dazu konfiguriert ist, ein pulsbreitenmoduliertes Ansteuerungssignal für die Stromversorgung der Widerstandselemente in Abhängigkeit von einem Sollwert einer Leistung (P_(sub)system_target_0) oder einer Temperatur (T_(sub)system_target_0) oder einer elektrischen Stromstärke (i_(sub)system_target_0) oder eines Widerstands (R_(sub)system_target_0) zu erzeugen, **dadurch gekennzeichnet, dass** die Steuereinheit mindestens eine Verarbeitungseinheit für Folgendes umfasst:

a. Aktivieren einer ersten Phase (P1) zur graduellen Modifizierung des Sollwerts gemäß einer ersten Verlaufsrichtung, die entweder zunehmend oder abnehmend ist, wobei die erste Regulierungsphase (P1) die folgenden Unterschritte (E1-E4) beinhaltet:

i. Modifizieren (E1) des Sollwerts in der ersten Verlaufsrichtung gemäß einer ersten vordefinierten Schrittweite,
ii. Bestimmen (E2) eines Schwellenwerts des Tastverhältnisses in Abhängigkeit von dem modifizierten Sollwert, wobei dieser Schwellwert für eine Überhitzung des mindestens einen Teilsatzes von Widerstandselementen repräsentativ ist,
iii. Erfassen (E3) und Vergleichen (E4) des Tastverhältnisses mit dem bestimmten Schwellenwert,

b. Wiederholen der ersten Regulierungsphase (P1), solange das Tastverhältnis den bei der letzten Wiederholung der ersten Phase (P1) bestimmten Schwellenwert überschreitet,
c. wenn bei der letzten Wiederholung der ersten Phase (P1) das Tastverhältnis den bestimmten Schwellenwert nicht überschreitet, Aktivieren einer zweiten Phase (P2) zur Modifizierung des Sollwerts gemäß einer zweiten Verlaufsrichtung, die zu der Verlaufsrichtung der ersten Phase (P1) entgegengesetzt ist, das heißt abnehmend, wenn die erste Verlaufsrichtung zunehmend ist, und zunehmend, wenn die erste Verlaufsrichtung abnehmend ist.

## Claims

1. Thermal management method to be applied in case of detection of overheating of an electrical heating device, in particular for a motor vehicle, said device comprising a plurality of resistive elements having a resistive value that varies as a function of temperature, these resistive elements being configured to be supplied electrically by an electrical voltage source, in which the electrical supply of at least one subset of resistive elements is controlled using a pulse-width-modulated control signal depending on a power setpoint (P_(sub)system_target_0), or temperature setpoint (T_(sub)system_target_0), or current setpoint (i_(sub)system_target_0), or resistance setpoint (R_(sub)system_target_0), **characterized in that** said method comprises the following steps:

a. activating a first phase (P1) of gradually regulating said setpoint in a first direction of change, which is either a decrease or an increase, the first regulating phase (P1) comprising the following sub-steps (E1-E4):

i. regulating (E1) said setpoint by modifying it in the first direction of change in first predefined increments,
ii. determining (E2) a threshold value for the duty cycle depending on the regulated value of the setpoint, this threshold value being representative of overheating of said at least one subset of resistive elements,
iii. noting (E3) the duty cycle and comparing (E4) it with the determined threshold value,

b. reiterating the first regulating phase (P1) as long as the duty cycle exceeds the determined threshold value,
c. if the duty cycle does not exceed the determined threshold value, activating a second phase (P2) of regulating said setpoint, in a second direction of change opposite the direction of change of the first phase (P1), i.e. a decrease if the first direction of change was an increase and an increase if the first direction of change was a decrease.

2. Method according to the preceding claim, wherein the first direction of change is a decrease.

3. Method according to one of the preceding claims, wherein the second regulating phase (P2) is gradual and comprises the following sub-steps (E6-E9):

a. regulating (E6) said setpoint by modifying it in the second direction of change in second predefined increments,
b. determining (E7) a threshold value for the duty cycle depending on the regulated value of the setpoint, this threshold value being representative of overheating of said at least one subset of resistive elements,
c. noting (E8) the duty cycle and comparing (E9) it with the threshold value determined in the last iteration of the second phase (P2),

wherein the second phase (P2) is reiterated as long as the duty cycle does not exceed the threshold value determined in the last iteration of the second phase (P1),
and wherein if, in the last iteration of the second phase (P2), the duty cycle exceeds the threshold value, the first phase (P1) is activated again.

4. Method according to Claims 2 and 3, wherein the second direction of change is increasing.

5. Method according to any one of the preceding claims, comprising a step (E1') of measuring the supply voltage (U_battery), and wherein, in each first phase (P1), the threshold value is determined depending on the measured supply voltage (U_battery), in addition to the modified setpoint.

6. Method according to any one of the preceding claims, comprising the following steps:

a. during the first regulating phase (P1), comparing the regulated value of said setpoint with a limit setpoint value (P_(sub)system_target_m; T_(sub)system_target_m; i_(sub)system_target_m; R_(sub)system_target_m),
b. if the modified setpoint reaches the limit setpoint value (P_(sub)system_target_m; T_(sub)system_target_m; i_(sub)system_target_m; R_(sub)system_target_m), generating (E5) a command to stop the electrical supply of said at least one subset of resistive elements for a predefined stoppage time.

7. Method according to the preceding claim, comprising a step of generating a command to resume the electrical supply of said at least one subset of resistive elements with a resumption setpoint set at a predetermined value lower than or equal to a permitted maximum setpoint value (P_(sub)system_target_0; T_(sub)system_target_0; i_(sub)system_target_0; R_(sub) system_target_0).

8. Method according to any one of the preceding claims, further comprising the following steps:

a. noting (E11) the temperature (T_PCB) of a board of the supply circuit of the resistive elements,
b. determining (E12) depending on the noted temperature (T_PCB) whether said at least one subset of resistive elements is in a minimum heating state, and
c. activating the first regulating phase (P1) when a minimum heating state of said at least one subset of resistive elements is determined.

9.  Method according to Claims 7 and 8, wherein:

    a. the temperature (T_PCB) of said board is noted subsequently to the predefined stoppage time of the electrical supply of said at least one subset of resistive elements, and wherein
    b. the command to resume the electrical supply of said at least one subset of resistive elements is generated (E14) with a resumption setpoint if a minimum heating state of said at least one subset of resistive elements is determined, depending on the noted temperature (T_PCB) of said board.

10. Method according to any one of the preceding claims, wherein the resistive elements are elements of positive temperature coefficient, the setpoint is a power setpoint, and the first direction of change is a decrease.

11. Method according to one of the preceding claims, wherein the first regulating phase (P1) and/or second regulating phase (P2) are/is iterated with a predefined period.

12. Method according to any one of Claims 1 to 11, wherein said first and/or second predefined increments are constant.

13. Method according to any one of Claims 1 to 11, wherein said first and/or second predefined increments are variable.

14. Method according to any one of the preceding claims, wherein:

    a. at least two separate subsets of resistive elements are controlled independently by pulse-width modulation of the electrical supply, and wherein
    b. for each subset, a detection threshold value of the duty cycle of the control signal is defined independently, depending on the nature and/or the number of the resistive elements of the subset.

15. Control unit for an electrical heating device comprising a plurality of resistive elements having a resistive value that varies as a function of temperature, these resistive elements being configured to be electrically supplied by an electrical voltage source, the control unit being configured to generate a pulse-width-modulated control signal for controlling the electrical supply of the resistive elements depending on a power setpoint (P_(sub)system_target_0), or a temperature setpoint (T_(sub)system_target_0), or a current setpoint (i_(sub)system_target_0), or a resistance setpoint (R_(sub)system_target_0), **characterized in that** the control unit comprises at least one processing means for:

    a. activating a first phase (P1) of gradually modifying said setpoint in a first direction of change, which is increasing or else decreasing, the first regulating phase (P1) comprising the following sub-steps (E1-E4):

        i. modifying (E1) said setpoint in the first direction of change in first predefined increments,
        ii. determining (E2) a threshold value for the duty cycle depending on the modified setpoint, this threshold value being representative of overheating of said at least one subset of resistive elements,
        iii. noting (E3) the duty cycle and comparing (E4) it with the determined threshold value,

    b. reiterating the first regulating phase (P1) as long as the duty cycle exceeds the threshold value determined in the last iteration of the first phase (P1),
    c. if, in the last iteration of the first phase (P1), the duty cycle does not exceed the determined threshold value, activating a second phase (P2) of modifying said setpoint, in a second direction of change opposite the direction of change of the first phase (P1), i.e. decreasing if the first direction of change was increasing and increasing if the first direction of change was decreasing.

P_(sub)system_target _0 ;
T_(sub)system_target_0 ;
i_(sub)system_target_0 ;
R_(sub)system_target_0

E0

E1'

U_battery

P_(sub)system_target _i ;
T_(sub)system_target_i ;
i_(sub)system_target_i ;
R_(sub)system_target_i

E1

E3

E2

PWM_(sub)system

PWM_(sub)system_lim_i

P1

E4

PWM_(sub)system ≤
PWM_(sub)system_lim_i

PWM_(sub)system >
PWM_(sub)system_lim_i

P2

i = m?

i ≠ m

i = m

E5

**Fig. 1**

**Fig. 2**

| i ; j | m | m-1 | m-2 | .. | .. | .. | .. | .. | .. | 3 | 2 | 1 | 0 |
|---|---|---|---|---|---|---|---|---|---|---|---|---|---|
| F | $\frac{4}{16}$ | $\frac{5}{16}$ | $\frac{6}{16}$ | $\frac{7}{16}$ | $\frac{8}{16}$ | $\frac{9}{16}$ | $\frac{10}{16}$ | $\frac{11}{16}$ | $\frac{12}{16}$ | $\frac{13}{16}$ | $\frac{14}{16}$ | $\frac{15}{16}$ | $\frac{16}{16}$ |
| P_(sub)system_target _(i,j) (%P_max) | 20 | 25 | 30 | 35 | 40 | 45 | 50 | 55 | 60 | 65 | 70 | 75 | 80 |
| PWM_(sub)system_lim _(i,j) (%) | 20 | 23 | 26 | 29 | 33 | 36 | 39 | 44 | 47 | 52 | 56 | 61 | 65 |

PWM_(sub)system ≤
PWM_(sub)system_lim_i

U_battery

P_(sub)system_target_ j;
T_(sub)system_target_ j ;
i_(sub)system_target_ j ;
R_(sub)system_target_ j

PWM_(sub)system_lim_j

PWM_(sub)system

P2

PWM_(sub)system >
PWM_(sub)system_lim_j

PWM_(sub)system ≤
PWM_(sub)system_lim_j

j = 0 ?

j ≠ 0

j = 0

**Fig. 3**

**Fig. 4**

**Fig. 5**

**EP 4 038 468 B1**

**RÉFÉRENCES CITÉES DANS LA DESCRIPTION**

**Documents brevets cités dans la description**

- DE 102016109039 A1